# EUROPEAN PATENT APPLICATION

(11) **EP 4 451 595 A1**
(43) Date of publication of application: **23.10.2024**
(21) Application number: 22906235.1
(22) Date of filing: 28.11.2022
(51) Int. Cl.: H04L 5/00

(54) **REFERENCE SIGNAL TRANSMISSION METHOD, REFERENCE SIGNAL RECEIVING METHOD, COMMUNICATION NODE, AND STORAGE MEDIUM**

(30) Priority: 14.12.2021 CN 202111530207
(71) Applicant: ZTE Corporation, Shenzhen, Guangdong 518057 (CN)
(72) Inventor: LI, Yong, Shenzhen, Guangdong 518057 (CN); WU, Hao, Shenzhen, Guangdong 518057 (CN); LU, Zhaohua, Shenzhen, Guangdong 518057 (CN); WANG, Yuxin, Shenzhen, Guangdong 518057 (CN)
(74) Representative: Gevers Patents
(86) International application number: PCT/CN2022/134558
(87) International publication number: WO 2023/109484

(57) **Abstract**

Provided in the present application are a reference signal transmission method, a reference signal receiving method, a communication node, and a storage medium. The method comprises: configuring configuration information of a reference signal resource, wherein the configuration information comprises a time domain symbol and a frequency domain position of a reference signal; and transmitting the reference signal on the reference signal resource according to the configuration information.

## Description

### TECHNICAL FIELD

The present disclosure relates to the technical field of wireless communication, and for example, to a reference signal transmission method, a reference signal receiving method, a communication node, and a storage medium.

### BACKGROUND

A procedure of acquiring and utilizing channel state information in a wireless communication system mainly includes: a base station sending a reference signal; a terminal receiving and measuring the reference signal, determining channel state information from the base station to the terminal, and reporting the channel state information to the base station; the base station receiving the channel state information reported by the terminal and determining a strategy of data transmission according to a channel state represented by the received channel state information and transmitting data, thereby improving the efficiency for transmitting data and the quality of communication. However, since a wireless channel is a time-varying channel, the base station transmits a reference signal once, and further, the terminal can receive and measure the reference signal once, and the terminal can feedback the channel state once according to the measurement. The base station uses the channel state fed back by the terminal until the update of the channel state is brought by the next transmission reference signal. If the base station and terminal are required to transmit a reference signal according to the real-time channel state, the above procedure needs to be repeated multiple times, thus signaling overhead is high, a lot of resources are occupied, and further, the flexibility of a reference signal transmission needs to be improved and the complexity of a reference signal transmission needs to be reduced.

### SUMMARY

The present disclosure provides a reference signal transmission method, a reference signal receiving method, a communication node, and a storage medium.

Embodiments of the present disclosure provide a reference signal transmission method, applied to a first communication node, including:
configuring configuration information of a reference signal resource, where the configuration information includes a time domain symbol and a frequency domain position of a reference signal; and
transmitting the reference signal on the reference signal resource according to the configuration information.

The embodiments of the present disclosure further provide a reference signal receiving method, applied to a second communication node, including:
receiving configuration information of a reference signal resource, where the configuration information includes a time domain symbol and a frequency domain position of a reference signal; and
receiving the reference signal on the reference signal resource according to the configuration information.

The embodiments of the present disclosure further provide a communication node, including: a memory, a processor, and a computer program stored on the memory and runnable on the processor; the processor, upon executing the program, implements the reference signal transmission method or the reference signal receiving method as described above.

The embodiments of the present disclosure further provide a computer-readable storage medium storing a computer program, the program, upon being executed by a processor, implements the reference signal transmission method or the reference signal receiving method as described above.

### BRIEF DESCRIPTION OF THE DRAWINGS

FIG. 1 is a flowchart of a reference signal transmission method provided by an embodiment;
FIG. 2 is a flowchart of a reference signal receiving method provided by an embodiment;
FIG. 3 is a structural schematic diagram of a reference signal transmission apparatus provided by an embodiment;
FIG. 4 is a structural schematic diagram of a reference signal receiving apparatus provided by an embodiment; and
FIG. 5 is a structural schematic diagram of a hardware structure of a communication node provided by an embodiment.

### DETAILED DESCRIPTION

The embodiments of the present disclosure can implement a method for acquiring a channel state: a terminal receiving and measuring a reference signal for a limited number of times, and the terminal extracting a parameter that can derive a time-varying channel state according to the measurement of the reference signal for the limited number of times, and feeding back the extracted parameter that can derive a time-varying channel state to a base station; the base station deriving the time-varying channel state according to an obtained parameter that can derive the time-varying channel state; and the base station being capable of deriving channel states at different time in future by using an obtained parameter once that can derive a time-varying channel state, until the parameter from which the time-varying channel state can be derived change.

A parameter that can derive a time-varying channel state once is extracted according to the present embodiment, and uses the parameter to derive the time-varying channel state for multiple transmissions of a reference signal in the future. That is, the present embodiment can indicate multiple transmissions of a reference signal at one channel state indication. By using the above method, an overhead of channel state information reported by a terminal can be saved, thus a delay caused by reporting the channel state information reduced, and a mismatch between the channel state information and a current channel state caused by a time interval of reporting the channel state information is reduced.

According to a transmission mode of a reference signal (RS), a reference signal can be divided into a periodic reference signal, a semi-persistent reference signal, and an aperiodic reference signal. A base station configures a reference signal resource (RS resource) and transmits a reference signal on the reference signal resource. A base station can configure a reference signal resource in multiple levels, where a first level is a reference signal setting (RS setting) that includes at least one reference signal resource set (RS resource set); a second level is a reference signal resource set that includes at least one reference signal resource; and a third level is a reference signal resource that specified an orthogonal frequency division multiplexing (OFDM) symbol, and a frequency domain position used for a reference signal transmission.

For a periodic reference signal, a base station configures a period and a time slot offset of a reference signal resource, and then transmits a reference signal on a reference signal resource at the configured time. For a semi-persistent reference signal, a base station configures a period and a time slot offset of a reference signal resource; when a reference signal is required to be transmitted, a base station can first activate a reference signal resource set with a medium access control (MAC) signaling. On this basis, a reference signal resource is transmitted on a reference signal resource set at the configured time. When a reference signal resource is required to be stopped, a base station can deactivate a reference signal resource set with a MAC signaling. For an aperiodic reference signal, when a reference signal is required to be transmitted, the base station can use a downlink control information format (DCI Format) signaling to trigger a reference signal resource set, and then within a time slot, a reference signal is transmitted once on a reference signal resource corresponding to a reference signal resource set. Based on the above embodiment, a terminal receives a configuration about a reference signal by a base station (a configuration about a reference signal can be understood as a configured reference signal resource), and receives a reference signal according to a configuration of a reference signal.

However, reference signal transmission methods in the related art have specific shortcomings. For example, for a periodic reference signal, a reference signal is transmitted repeatedly on a reference signal resource, thus a large amount of wireless resource overhead is occupied and the efficiency of wireless resource utilization is reduced (for example, throughput and spectral efficiency are reduced). For the semi-persistent reference signal, a MAC signaling is used to activate and deactivate the reference signal resource, thus resulting in a long time span from starting a signaling to executing the signaling, which is not flexible enough. If the time of using a semi-persistent reference signal mode to transmit a reference signal is short, it is easy to lose an opportunity to capture the channel state. If the time of using a semi-persistent reference signal mode to transmit a reference signal is longer, the overhead of radio resource occupied by the reference signal being too large is resulted; and the reference signal transmission procedure requires two MAC signaling, and thus, the MAC signaling overhead increases. For the aperiodic reference signal, a downlink control information format signaling triggers once and then the reference signal is transmitted once. When the reference signal needs to be transmitted multiple times, a signaling storm may occur.

In the embodiments of the present disclosure, a reference signal transmission method is disclosed. A first communication node configures configuration information of a reference signal resource, and transmits a reference signal to a second communication node on a reference signal resource according to the configuration information of the reference signal resource. Therefore, unnecessary reference signal transmission overhead can be saved, and thus, a reference signal is transmitted effectively, and the flexibility of transmitting a reference signal is improved.

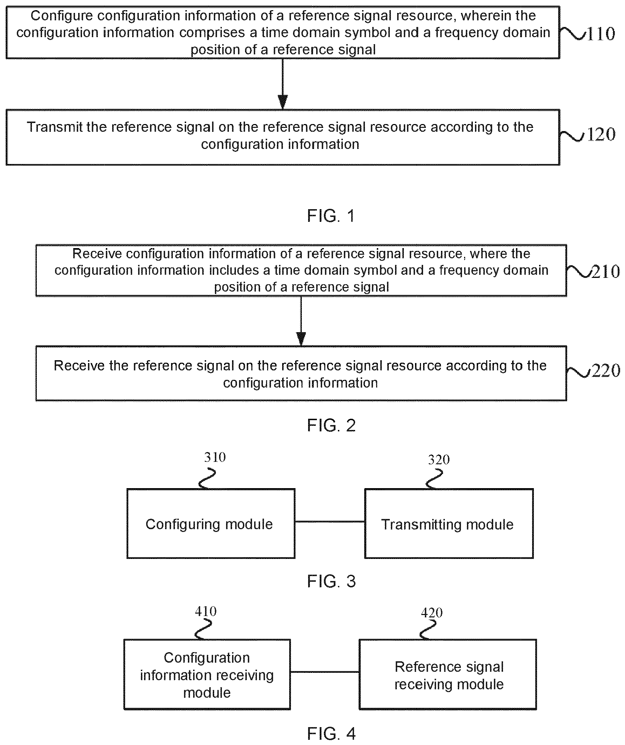

FIG. 1 is a flow chart of a reference signal transmission method provided by an embodiment. This method can be applied at a first communication node (such as a base station). As shown in FIG. 1, the method provided by this embodiment includes step 110 and step 120.

In step 110, configuration information of a reference signal resource is configured, where the configuration information includes a time domain symbol and a frequency domain position of a reference signal.

In step 120, a reference signal is transmitted on the reference signal resource according to the configuration information.

In this embodiment, the time domain symbol may refer to an OFDM symbol. Wireless communication has developed to the fifth generation communication technology. The Long Term Evolution (LTE) technology in the fourth generation wireless communication technology and the New Radio (NR) technology in the fifth generation wireless communication technology are based on the OFDM technology. In the OFDM technology, the smallest frequency domain unit is a subcarrier, and the smallest time domain unit is an OFDM symbol. To facilitate the usage of a frequency domain resource, a resource block can be defined. A resource block can be defined as a specific number of continuous subcarriers. A bandwidth block (Bandwidth Part, BWP) is also defined. A bandwidth block can be defined as a specific number of continuous resource blocks on a carrier; in order to facilitate the usage of a time domain resource, a time slot (slot) is defined. The time slot can be defined as another specific number of continuous OFDM symbols.

In this embodiment, a first communication node configures configuration information of a reference signal resource. Herein, there are two ways to configure the configuration information of the reference signal resource. One scenario is that the first communication node configures the configuration information of the reference signal resource by broadcasting. That is, the first communication node determines the configuration information of the reference signal resource and notifies the configuration information by broadcasting. Another scenario is that the first communication node configures the configuration information of the reference signal resource to a second communication node. That is, the first communication node configures the configuration information of the reference signal resource and transmits the reference signal on the reference signal resource according to the configuration information, and the second communication node receives the configuration information of the reference signal resource and receives the reference signal on the reference signal resource according to the configuration information. The first communication node may be a base station, and the second communication node may be a terminal, or the first communication node may be a first terminal, and the second communication node may be a second terminal; or the first communication node may be one node in wireless communication, the second communication node may be another node in wireless communication; this is not limited herein.

Configuration information of a reference signal resource may be used to indicate a reference signal resource. For example, the configuration information of the reference signal resource may indicate one of: an OFDM symbol of a reference signal, a frequency domain position of the reference signal, a number of a port of the reference signal, a code division multiplexing mode of a port of the reference signal, and a period and an offset of the reference signal, etc. The OFDM symbol of the reference signal is also an OFDM symbol of the reference signal resource. The frequency domain position of the reference signal is also a frequency domain position of the reference signal resource. The number of the port of the reference signal is also the number of the port of the reference signal resource. The code division multiplexing mode of the port of the reference signal resource is also the code division multiplexing mode of the port of the reference signal resource, and the period and the offset of the reference signal are also a period and an offset of the reference signal resource.

A first communication node transmits a corresponding reference signal on a reference signal resource according to configuration information of a reference signal resource. In this case, a node requiring to receive the reference signal (that is, a second communication node) can receive the configuration information of the reference signal resource, and receive the reference signal on the reference signal resource according to the configuration information of the reference signal resource.

In this embodiment, configuration information of a reference signal resource can be flexibly configured by a first communication node. On this basis, a reference signal is transmitted on the reference signal resource according to the configuration information, which can effectively improve the flexibility of transmitting the reference signal, thereby completing a transmission of the reference signal conveniently, reducing the complexity of a system, saving the unnecessary reference signal transmission overhead, and reducing resource occupancy. For example, it can avoid blindly using more wireless resources to transmit the reference signal, and avoid blindly and ineffectively transmitting the reference signal, and avoid blindly detecting reference signal ineffectively, etc.

In an embodiment, before step 110, the method further includes: triggering a transmission of a reference signal through a signaling of a downlink control information (DCI) format; where the signaling in the DCI format once triggers a number of D times of a transmission of a reference signal on a reference signal resource and D is a positive integer.

In 4G or 5G wireless communications, a first communication node can carry a DCI format on a Physical Downlink Control Channel (PDCCH) and transmit a DCI in a DCI format. An uplink data transmission, a downlink data transmission and a slot format can be scheduled through a DCI signaling or a signaling in a DCI format. A reference signal, or a reference signal resource, or a reference signal resource set can also be triggered through a DCI signaling or a signaling in a DCI format. By triggering a reference signal once through a DCI signaling or a signaling in a DCI format, the first communication node can transmit a reference signal once on a corresponding reference signal resource. When a reference signal needs to be transmitted multiple times, or a terminal (i.e., a second communication node) needs to measure a reference signal multiple times, a DCI signaling or a signaling in a DCI format must be used multiple times to trigger a reference signal. For example, if it is necessary to continuously transmit a reference signal multiple times, or if a terminal needs to continuously measure a reference signal multiple times, a DCI signaling or a signaling in a DCI format must be used multiple times to trigger a reference signal. However, using a DCI signaling or a signaling in a DCI format multiple times to trigger a reference signal can easily cause a signaling storm, increase a signaling interference in a communication system, and pressure on the communication system to process a signaling, thereby reducing a system performance and even causing a system crash. Similarly, the DCI signaling or the signaling in the DCI format triggering the reference signal resource or the reference signal resource set has a similar risk.

In this embodiment, in order to avoid an occurrence of a problem such as a signaling storm, a first communication node can trigger a transmission of a reference signal through a DCI signaling or a signaling in a DCI format, where a DCI signaling or a signaling in a DCI format once triggers a transmission of a reference signal on a corresponding reference signal resource for D times, that is, D may be a number of times of a transmission of the reference signal on the corresponding reference signal resource, and D may be a positive integer. By transmitting a reference signal multiple times on the reference signal resource triggered by the DCI signaling or the signaling in the DCI format once, a case that uses a signaling in a DCI format to trigger a reference signal multiple times can be avoided, thereby reducing the number of using a signaling in a DCI format, so as to avoid and control a signaling storm effectively. Parameter D can be set as 1 or an integer greater than 1 according to an actual need. For example, a value of parameter D can be set according to a number, and a frequency of a transmission of a reference signal that needs to be transmitted by a communication system, a frequency of using a signaling in a DCI format in the system, etc.

In an embodiment, configuration information includes information of a number of times D of a transmission of a reference signal on a reference signal resource.

In this embodiment, D is a number of times of a transmission of a reference signal on a reference signal resource. Information of D may include: a domain of a signaling in a DCI format that triggers a reference signal being mapped to a value of D, a domain of a signaling in a DCI format that triggers a reference signal being mapped to selection information of a candidate value of D, a reference value of D, offset information relative to a reference value of D, and a value of D. On this basis, the configuration information of configuring a reference signal resource may include information of a number of times D of a transmission of the reference signal on the reference signal resource, so as to indicate D. The configuration information may include any of D information, so as to indicate D. For example, the configuration information may include the selection information that maps a domain of a signaling in a DCI format that triggers the reference signal to a candidate value of D to indicate D; or the configuration information may include a value of D, so as to indicate D, etc.

In an embodiment, a signaling in a DCI format carries information of a number of times D of a transmission of a reference signal on a reference signal resource.

In this embodiment, a signaling in a DCI format that triggers a reference signal may carry information of a number of times D of a transmission of the reference signal on a corresponding reference signal resource, so as to indicate D. For example, a signaling in a DCI format that triggers a reference signal may carry a value of D, so as to indicate D; or a domain of a signaling in a DCI format that triggers a reference signal is mapped to a value of D, a signaling in a DCI format so as to indicate D; or a domain of a signaling in a DCI format that triggers a reference signal signaling in a DCI format is mapped to selection information for candidate values of D, so as to indicate D.

In an embodiment, a part of information of D carried by a signaling in a DCI format and another part of the information of D included in configuration information jointly indicate a number of times D of a transmission of a reference signal on a reference signal resource.

In this embodiment, a number of times D of a transmission of a reference signal on a reference signal resource can be jointly indicated through a signaling in a DCI format and configuration information. For example, a part of information of D carried by a signaling in a DCI format and another part of information of D included in configuration information may jointly indicate a number of times D of a transmission of a reference signal on a reference signal resource. Specifically, for example, a part of information of D carried by a signaling in a DCI format may be selection information for candidate values of D, and another part of information of D included in configuration information may be a value of D mapped from a domain of a signaling in a DCI format, and D can be jointly indicated according to these two parts of information. For another example, a part of information of D carried by a signaling in a DCI format may be offset information relative to a reference value of D, and another part of information included in configuration information may be a reference value of D, and D may be jointly indicated according to these two parts of information.

In an embodiment, configuration information includes a time offset of two adjacent reference signal transmissions.

In this embodiment, a time offset between two adjacent reference signal transmissions can be understood as: time of a previous reference signal transmission is reference time, and a time offset between the time of the next reference signal transmission and the above reference time is a time offset between two adjacent reference signal transmissions. For example, assuming that the time of the d-th reference signal transmission is used as a reference time, a time offset between the (d+1)-th reference signal transmission time and the reference time can be used as the time offset between the d-th and (d+1)-th adjacent reference signal transmissions.

Configuration information of a reference signal resource may include a time offset of two adjacent reference signal transmissions. For example, one way for the configuration information of the reference signal resource to include a time offset of two adjacent reference signal transmissions is that the configuration information may include a value of the time offset of the two adjacent reference signal transmissions. Another way may be that the configuration information may include selection information of candidate values of a time offset of two adjacent reference signal transmissions. Yet another way may be that the configuration information may include an offset value relative to a time offset reference value of two adjacent reference signal transmissions.

A time offset candidate value of two adjacent reference signal transmissions may be predetermined. For example, one way may be predefined by a protocol, and another way can be negotiated and predetermined by two communicating parties. A time offset reference value of two adjacent reference signal transmissions can also be predetermined. For example, one way can be predefined by a protocol, and another way can be negotiated and predetermined by two communicating parties.

In an embodiment, a signaling in a DCI format carries a time offset of two adjacent reference signal transmissions.

In this embodiment, a signaling in a DCI format that triggers a reference signal may carry a time offset of two adjacent reference signal transmissions. For example, one way in which a signaling in a DCI format that triggers a reference signal carries a time offset of two adjacent reference signal transmissions is that a signaling in a DCI format can carry a value of a time offset of two adjacent reference signal transmissions. Another way may be that a domain of a signaling in a DCI format is mapped to selection information of a time offset candidate value for two adjacent reference signal transmissions. Yet another way may be that a domain of a signaling in a DCI format is mapped to an offset value relative to a time offset reference value of two adjacent reference signal transmissions.

In an embodiment, a part of information of a time offset of two adjacent reference signal transmissions carried by a signaling in a DCI format and another part of information of a time offset of two adjacent reference signal transmissions included in the configuration information jointly indicate a time offset between two adjacent reference signal transmissions.

In this embodiment, a time offset of two adjacent reference signal transmissions can be jointly indicated through a signaling in a DCI format and configuration information. For example, a part of information of a time offset of two adjacent reference signal transmissions carried by a signaling in a DCI format and another part of information of a time offset of two adjacent reference signal transmissions included in configuration information jointly indicate a time offset of two adjacent reference signal transmissions. Specifically, for example, a part of information of a time offset of two adjacent reference signal transmissions carried by the signaling in the DCI format may be selection information of time offset candidate values of two adjacent reference signal transmissions, and another part of information of a time offset of two adjacent reference signal transmissions included in the configuration information can be a candidate value of the time offset of two adjacent reference signal transmissions, and the time offset of two adjacent reference signal transmissions can be jointly indicated according to these two parts of information. For another example, a part of information of a time offset of two adjacent reference signal transmissions carried by a signaling in a DCI format may be an offset value relative to a time offset reference value of two adjacent reference signal transmissions. Another part of information of a time offset of two adjacent reference signal transmissions included in the configuration information can be a reference value of a time offset of two adjacent reference signal transmissions, and the time offset of two adjacent reference signal transmissions can be jointly indicated according to these two parts of information.

In an embodiment, a number of times of a transmission of a reference signal on a reference signal resource is determined according to a time offset of two adjacent reference signal transmissions.

In this embodiment, a first communication node may indicate a time offset of two adjacent reference signal transmissions. For example, a way for a first communication node to indicate a time offset of two adjacent reference signal transmissions may be that configuration information of a reference signal resource may include a time offset of two adjacent reference signal transmissions. Another way may be that a signaling in a DCI format may carry a time offset of two adjacent reference signal transmissions.

In this embodiment, in a case where a first communication node indicates a time offset of two adjacent reference signal transmissions, a number of times D of a transmission of a reference signal on a reference signal resource can be determined according to a time offset of two adjacent reference signal transmissions. For example, one way for determining a number of times of a transmission of a reference signal on a reference signal resource according to a time offset of two adjacent reference signal transmissions may be that a protocol predetermines a mapping table from a time offset of two adjacent reference signal transmissions to a number D of a transmission, in order to determine D according to the mapping table and the time offset of two adjacent reference signal transmissions. Another way may be to set a monotonically increasing mapping relationship between a number of times D of a transmission on a reference signal and a time offset of two adjacent reference signal transmissions; where the monotonically increasing mapping relationship may be a monotonically increasing ratio relationship, a monotonically increasing linear relationship, a monotonically increasing exponential relationship, or a monotonically increasing logarithmic relationship, etc. In this embodiment, the monotonically increasing mapping relationship is set to adjust a time interval of the terminal, a measurement of the reference signal, thereby increasing the stability of measuring a channel state parameter.

Another way for determining a number of times D of a transmission of a reference signal on a reference signal resource according to a time offset of two adjacent reference signal transmissions can be that there is a monotonically decreasing mapping relationship between a number of times D of a transmission of a reference signal on a reference signal resource and a time offset of two adjacent reference signal transmissions the monotonically decreasing mapping relationship can be a monotonically decreasing proportional relationship, a monotonically decreasing linear relationship, a monotonically decreasing inverse proportional relationship, or a monotonically decreasing quadratic function relationship, etc. In this embodiment, a monotonically decreasing mapping relationship is set to maintain a time interval of a terminal's measurement on a reference signal, so as to determine the proportion of the measurement time overhead during the period of maintaining the channel state information, thereby preventing the fluctuation of the overhead from affecting the efficiency of data transmission.

In an embodiment, a time offset of two adjacent reference signal transmissions is determined according to a number of times that a reference signal is transmitted on a reference signal resource.

In this embodiment, a first communication node may indicate a number of times D of a transmission of a reference signal on a reference signal resource. For example, one way for a first communication node to indicate the number of times D of the transmission of the reference signal on a reference signal resource may be that configuration information of a reference signal resource may include the number of times D of a transmission of the reference signal on the reference signal resource. Another way can be that a signaling in a DCI format may carry the number of times D of a transmission of a reference signal on a reference signal resource.

In this embodiment, in a case where a first communication node indicates a number of times D of a transmission of a reference signal on a reference signal resource, a time offset of two adjacent reference signal transmissions can be determined according to the number of times D of a transmission of the reference signal on the reference signal resource. For example, one way for determining a time offset of two adjacent reference signal transmissions according to the number of times of a transmission of the reference signal on the reference signal resource may be that a protocol predetermines a mapping table from a time offset of two adjacent reference signal transmissions to the number of times D of a transmission of the reference signal on the reference signal resource, so as to determine a time offset of two adjacent reference signal transmissions according to the mapping table and the number of times D of a transmission. Another way may be to set a monotonically increasing mapping relationship between a time offset of two adjacent reference signal transmissions and the number of times D of a transmission of the reference signal on the reference signal resource; where the monotonically increasing mapping relationship may be a monotonically increasing proportional relationship, a monotonically increasing linear relationship, a monotonically increasing exponential relationship, or a monotonically increasing logarithmic relationship, etc. In this embodiment, the monotonically increasing mapping relationship is set to adjust a time interval for a terminal's measurement on a reference signal, thereby increasing the stability of a measured channel state parameter.

Another way to determine a time offset of two adjacent reference signal transmissions according to a number of a transmission of a reference signal on a reference signal resource is to set a monotonically decreasing mapping relationship between a time offset of two adjacent reference signal transmissions and the number of times D of a transmission of the reference signal on the reference signal resource. The monotonically decreasing mapping relationship may be a monotonically decreasing proportional relationship, a monotonically decreasing linear relationship, a monotonically decreasing inverse proportional relationship, or a monotonically decreasing quadratic function relationship, etc. In this embodiment, the monotonically decreasing mapping relationship is set to maintain a time interval of the terminal's measurement on the reference signal, so as to determine a proportion of measurement time overhead during the period of maintaining the channel state information, thereby preventing the fluctuation of the overhead from affecting the efficiency of data transmission.

In an embodiment, the configuration information includes K time offsets, where different time offsets correspond to different reference signal transmission rounds, and K is a positive integer.

In this embodiment, configuration information of a reference signal resource may include K time offsets of a reference signal transmission, where different time offsets correspond to different reference signal transmission rounds. For example, a time offset may correspond to one or more reference signal transmission rounds; or a time offset can correspond to an index number of one or more reference signal transmissions; and K can be a positive integer.

For example, configuration information of a reference signal resource may include K time offsets of a reference signal transmission, where a time offset corresponds to a reference signal transmission round or a time offset corresponds to an index number of a reference signal transmission. For another example, the configuration information of the reference signal resource may include K time offsets of a reference signal transmission, where a time offset corresponds to two reference signal transmission rounds, or a time offset corresponds to index numbers of two reference signal transmissions. For another example, the configuration information of the reference signal resource may include K time offsets of a reference signal transmission, where a time offset corresponds to X reference signal transmission rounds, or a time offset corresponds to an index number of X reference signal transmissions, and X can be a positive integer.

In an embodiment, the configuration information includes K time offsets, where different time offsets sequentially correspond to different reference signal transmission rounds, and K is a positive integer.

In this embodiment, the configuration information of a reference signal resource may include K time offsets of a reference signal transmission, where different time offsets may sequentially correspond to different reference signal transmission rounds. For example, a time offset may correspond to one or more reference signal transmission rounds; or a time offset can sequentially correspond to an index number of one or more reference signal transmissions; and K can be a positive integer.

For example, configuration information of a reference signal resource may include K time offsets of a sequential transmission of a reference signal, where a time offset may sequentially correspond to a reference signal transmission round, or a time offset may sequentially correspond to an index number of a reference signal transmission. For another example, the configuration information of the reference signal resource may include K time offsets of the sequential transmission of the reference signal, where a time offset may sequentially correspond to two reference signal transmission round, or a time offset may sequentially correspond to index numbers of two reference signal transmission. For another example, the configuration information of the reference signal resource may include K time offsets of the sequential transmission of the reference signal, where a time offset may sequentially correspond to X reference signal transmission round, or a time offset may sequentially correspond to index numbers of X reference signal transmissions and X is a positive integer.

In an embodiment, configuration information includes a period of a reference signal resource, and a time slot offset of a reference signal resource. A first communication node indicates at least one of: a number of times D' of a continuous transmission of a reference signal on the reference signal resource, and a number N of a continuous stop of the reference signal on the reference signal resource; where D' is a positive integer and N is a non-negative integer.

In this embodiment, configuration information of a reference signal resource may include: a period of a reference signal resource and a time slot offset of a reference signal resource.

A first communication node may indicate at least one of a number of times D' of a continuous transmission of a reference signal on a reference signal resource and a number of times N of a continuous stop of a reference signal on a reference signal resource. D' can be a positive integer, and N can be a non-negative integer. For example, in the first communication node, D' and N can be indicated through configuration information or through a signaling in a DCI format.

According to a period of a reference signal resource and a time slot offset of a reference signal resource, a time point at which a reference signal is transmitted on the reference signal resource can be determined, and at corresponding time points, the reference signal is transmitted on the reference signal resource continuously for D' times respectively, and then, the reference signal is continuously stopped transmitting on the reference signal resource for N times respectively.

In an embodiment, at least one of D' and N is indicated through a signaling in a DCI format.

In this embodiment, a way for a first communication node to indicate at least one of D' and N can be that: at least one of D' and N is indicated through a signaling in a DCI format. For example, a signaling in a DCI format may carry at least one of D' and N.

In an embodiment, configuration information further includes: a number of times D' of a continuous transmission of a reference signal on a reference signal resource, and a number of times N of a continuous stop of a reference signal on a reference signal resource.

In this embodiment, one way for a first communication node to indicate at least one of D' and N can be that: configuration information includes a number of times D' of a continuous transmission of a reference signal on a reference signal resource, and a number of times N of a continuous stop of a reference signal on a reference signal resource.

In an embodiment, configuration information further includes: a number of times D' of a continuous transmission of a reference signal on a reference signal resource, and a number of times N of a continuous stop of a reference signal carried by a signaling in a DCI format on a reference signal resource.

In this embodiment, one way for a first communication node to indicate at least one of D' and N can be that: configuration information includes a number of times D' of a continuous transmission of a reference signal on a reference signal resource, and a number N of a continuous stop of a reference signal carried by a signaling in a DCI format on a reference signal resource.

In an embodiment, configuration information further includes: a number of times N of a continuous stop of a reference signal on a reference signal resource; and a number of times D' of a continuous transmission of a reference signal carried by a signaling in a DCI format on a reference signal resource.

In this embodiment, one way for a first communication node to indicate at least one of D' and N can be that: configuration information includes a number of times N of a continuous stop of a reference signal on a reference signal resource, and a number of times D' of a continuous transmission of a reference signal carried by a signaling in a DCI format on a reference signal resource.

In an embodiment, a signaling in a DCI format carries: a number of times N of a continuous stop of a reference signal on a reference signal resource, and a number of times D' of a continuous transmission of a reference signal on a reference signal resource.

In this embodiment, one way for a first communication node to indicate at least one of D' and N can be that: a number of times N of a continuous stop of a reference signal carried by a signaling in a DCI format on a reference signal resource, and a number of times D' of a continuous transmission of a reference signal on a reference signal resource.

In an embodiment, a reference signal is transmitted according to following information: a reference value of a number of times D' of a continuous transmission of a reference signal; a number of times N of a continuous stop of a reference signal; an offset value of a number of times D' of a continuous transmission of a reference signal carried by a signaling in a DCI format, where D' is a positive integer and N is a non-negative integer.

In this embodiment, a reference signal can be transmitted according to following information: a reference value of a number of times D' of a continuous transmission of a reference signal; a number of times N of a continuous stop of a reference signal; an offset value of a number of times D' of a continuous transmission of a reference signal carried by a signaling in a DCI format, where the number of times D' of the continuous transmission of the reference signal can be jointly indicated according to the reference value of the number of times D' of the continuous transmission of the reference signal and the offset value of the number of times D' of the continuous transmission of the reference signal.

In an embodiment, one way for a first communication node to indicate at least one of D' and N can be that: configuration information includes: a reference value of a number of times D' of a continuous transmission of a reference signal, and a number of times N of a continuous stop of a reference signal; an offset value of a number of times D' of a continuous transmission of a reference signal carried by a signaling in a DCI format.

In an embodiment, a reference signal is transmitted according to following information: a number of times D' of a continuous transmission of a reference signal; a reference value of a number of times N of a continuous stop of a reference signal; an offset value of a number of times N of a continuous stop of a reference signal carried by a signaling in a DCI format, where D' is a positive integer and N is a non-negative integer.

In this embodiment, a reference signal can be transmitted according to following information: a number of times D' of a continuous transmission of a reference signal; a reference value of a number of times N of a continuous stop of a reference signal; an offset value of a number of times N of a continuous stop of a reference signal carried by a signaling in a DCI format. The number of times N of the continuous stop of the reference signal can be jointly indicated according to the reference value of a number of times N of the continuous stop of the reference signal and the offset value of a number of times N of the continuous stop of the reference signal.

In an embodiment, one way for a first communication node to indicate at least one of D' and N can be that: configuration information includes: a number of times D' of a continuous transmission of a reference signal and a reference value of a number of times N of a continuous stop of a reference signal; a signaling in a DCI format carries an offset value of a number of times N of a continuous stop of a reference signal.

In an embodiment, a reference signal is transmitted according to following information: a number of times D' of a continuous transmission of a reference signal, and a number of times N of a continuous stop of a reference signal indicated by the number of times of the continuous transmission of the reference signal, where D' is a positive integer, and N is a non-negative integer.

In this embodiment, a reference signal can be transmitted according to following information: a number of times D' of a continuous transmission of a reference signal, and a number of times N of a continuous stop of a reference signal indicated by the number of times D' of the continuous transmission of the reference signal, where D' can be a positive integer, and N can be a non-negative integer.

Specifically, a number of times D' of a continuous transmission of a reference signal indicates a number of times N of a continuous stop of a reference signal. For example, a number of times N of the continuous stop of the reference signal is in a predetermined proportion to a number of times D' of the continuous transmission of the reference signal. For another example, a sum of a number of times N of the continuous stop of the reference signal and the number of times D' of the continuous transmission of the reference signal is a predetermined value.

In an embodiment, one way for a first communication node to indicate at least one of D' and N can be that: configuration information includes: a number of times D' of a continuous transmission of a reference signal; and a number of times N of a continuous stop of a reference signal indicated by the number of times D' of the continuous transmission of the reference signal.

In an embodiment, a reference signal is transmitted according to following information: a number of times N of a continuous stop of a reference signal, and a number D' of a continuous transmission of a reference signal indicated by the number of times of the continuous stop of the reference signal, where D' is a positive integer and N is non-negative integer.

In this embodiment, a reference signal can be transmitted according to following information: a number of times N of a continuous stop of a reference signal, and a number of times D' of a continuous transmission of a reference signal indicated by the number of times N of the continuous stop of the reference signal, where D' is a positive integer and N is a non-negative integer.

Specifically, a number of times N of a continuous stop of a reference signal indicates a number of times D' of a continuous transmission of a reference signal. For example, a number of times D' of a continuous transmission of a reference signal is in a predetermined proportion to a number of times N of a continuous stop of a reference signal. For another example, a sum of a number of times D' of a continuous transmission of a reference signal and a number of times N of a continuous stop of a reference signal is a predetermined value.

In an embodiment, one way for a first communication node to indicate at least one of D' and N can be that: configuration information includes: a number of times N of a continuous stop of a reference signal; and a number of times D' of a continuous transmission of a reference signal indicated by a number of times N of a continuous stop of a reference signal.

In an embodiment, a reference signal resource set is triggered by a signaling in a DCI format. The reference signal resource set includes D reference signal resources. The reference signal is transmitted on the D reference signal resources, and D is a positive integer.

In this embodiment, a first communication node triggers a reference signal resource set through a signaling in a DCI format, where a reference signal is transmitted on the reference signal resource set. The reference signal resource set may include D reference signal resources, and the reference signal may be transmitted on the D reference signal resource sets, and D may be a positive integer.

In an embodiment, a reference signal is transmitted on D reference signal resources located at different time slots, and D is greater than 1; and configuration information includes a time offset between reference signal resources.

In this embodiment, when a reference signal is transmitted on D reference signal resource sets, the reference signal may be transmitted on D reference signal resources located at different time slots, and D is greater than 1. One way for a first communication node to indicate a time offset between reference signal resources may be that configuration information includes the time offset between the reference signal resources.

In an embodiment, a reference signal is transmitted on D reference signal resources located at different time slots, and D is greater than 1; and a signaling in a DCI format carries a time offset between reference signal resources.

In this embodiment, when a reference signal is transmitted on D reference signal resource sets, the reference signal may be transmitted on D reference signal resources located at different time slots, and D is greater than 1. One way for a first communication node to indicate a time offset between reference signal resources may be that a signaling in a DCI format carries a time offset between reference signal resources.

In an embodiment, a reference signal is transmitted on D reference signal resources located at different time slots, and D is greater than 1; and numbers of ports of at least two reference signals are different.

In this embodiment, when a reference signal is transmitted on D reference signal resource sets, a reference signal may be transmitted on D reference signal resources located at different time slots, and D is greater than 1. One way for a first communication node to indicate a time offset between reference signal resources may be that numbers of ports of at least two reference signal resources are different.

In this embodiment, a reference signal resource set may include D reference signal resources, where numbers of ports of D reference signal resources are same; or numbers of ports of at least two reference signal resources are different. In this embodiment, by setting the numbers of the ports of at least two reference signal resources included in the reference signal resource set to be different, on the one hand, the resource with a large number of ports can be used to perform a full port coverage measurement; on the other hand, the resource with the small number of ports can be used to perform, so as to track a time domain change in a channel state thus the performance of a channel state measurement can be improved and an overhead of a wireless resource occupied by a reference signal transmission is saved.

The embodiments of the present disclosure further provide a reference signal receiving method. FIG. 2 is a flow chart of a reference signal receiving method provided by an embodiment. As shown in FIG. 2, this method can be applied to a second communication node, such as a terminal. The method provided by this embodiment includes step 210 and step 220.

In step 210, configuration information of a reference signal resource is received, where the configuration information includes a time domain symbol and a frequency domain position of a reference signal.

In step 220, the reference signal is received on the reference signal resource according to the configuration information.

In this embodiment, a second communication node receives configuration information of a reference signal resource sent by a first communication node, where the configuration information of the reference signal resource is configured by the first communication node, and the configuration information may include a time domain symbol and a frequency domain location of a reference signal. On this basis, the second communication node may receive the reference signal on the reference signal resource according to the received configuration information, where the reference signal is transmitted by the first communication node on the reference signal resource according to the configuration information. Through flexible configuration of the configuration information, the flexibility of reference signal transmission and reference reception can be improved.

In an embodiment, a transmission of the reference signal is triggered by a signaling in a DCI format, where the signaling in the DCI format triggers the reference signal to be transmitted on the reference signal resource for D times, and D is a positive integer.

In an embodiment, the configuration information includes information of a number of times D of a transmission of the reference signal on the reference signal resource.

In an embodiment, a signaling in a DCI format carries information of a number of times D of a transmission of the reference signal on the reference signal resource.

In an embodiment, a number of times D of a transmission of a reference signal on a reference signal resource is jointly indicated by a part of information of D carried in a signaling in a DCI format and another part of the information of D included in configuration information.

In an embodiment, the configuration information includes a time offset of two adjacent reference signal transmissions.

In an embodiment, a signaling in a DCI format carries a time offset of two adjacent reference signal transmissions.

In an embodiment, a time offset of two adjacent reference signal transmissions is jointly indicated though a part of information of a time offset of two adjacent reference signal transmissions and another part of information of a time offset of two adjacent reference signal transmissions included in configuration information.

In an embodiment, a number of times of a transmission of a reference signal on a reference signal resource is determined according to a time offset of two adjacent reference signal transmissions.

In an embodiment, a time offset between two adjacent reference signal transmissions is determined according to a number of times of a transmission of a reference signal on a reference signal resource.

In an embodiment, the configuration information includes K time offsets, where different time offsets correspond to different reference signal transmission rounds, and K is a positive integer.

In an embodiment, the configuration information includes K time offsets, where different time offsets sequentially correspond to different reference signal transmission rounds, and K is a positive integer.

In an embodiment, the configuration information includes: a period of a reference signal resource and a time slot offset of a reference signal resource.

A first communication node indicates at least one of: a number of times D' of a continuous transmission of the reference signal on the reference signal resource, and a number of times N of a continuous stop of a reference signal of a continuous stop of a reference signal on a reference signal resource; where D' is a positive integer and N is a non-negative integer.

In an embodiment, at least one of D' and N is indicated through a signaling in a DCI format.

In an embodiment, the configuration information further includes: a number of times D' of a continuous transmission of the reference signal on the reference signal resource, and a number of times N of a continuous stop of the reference signal of a continuous stop of the reference signal on the reference signal resource.

In an embodiment, the configuration information further includes: a number of times D' of a continuous transmission of the reference signal on the reference signal resource; where a signaling in a DCI format carries a number of times N of a continuous stop of the reference signal of a continuous stop of the reference signal on the reference signal resource.

In an embodiment, the configuration information further includes: a number of times N of a continuous stop of a reference signal on a reference signal resource; a signaling in a DCI format carries a number of times D' of a continuous transmission of a reference signal on a reference signal resource.

In an embodiment, a signaling in a DCI format carries: a number of times N of a continuous stop of a reference signal on a reference signal resource, and a number of times D' of a continuous transmission of a reference signal on a reference signal resource.

In an embodiment, a reference signal is transmitted according to following information: a reference value of a number of times D' of a continuous transmission of a reference signal; a number of times N of a continuous stop of a reference signal; an offset value of a number of times D' of a continuous transmission of a reference signal carried by a signaling in a DCI format, where D' is a positive integer and N is a non-negative integer.

In an embodiment, a reference signal is transmitted according to following information: a number of times D' of a continuous transmission of a reference signal; a reference value of a number of times N of a continuous stop of a reference signal; an offset value of a number of a continuous stop of a reference signal carried by a signaling in a DCI format, where D' is a positive integer and N is a non-negative integer.

In an embodiment, a reference signal is transmitted according to following information: a number of times D' of a continuous transmission of a reference signal, and a number of times N of a continuous stop of a reference signal indicated by the number of times of a continuous transmission of a reference signal, where D' is a positive integer and N is a non-negative integer.

In an embodiment, a reference signal is transmitted according to following information: a number of times N of a continuous stop of a reference signal, and a number of times D' of a continuous transmission of a reference signal indicated by the number of times of a continuous stop of a reference signal, where D' is a positive integer and N is a non-negative integer.

In an embodiment, a reference signal resource set can be triggered through a signaling in a DCI format, where the reference signal resource set includes D reference signal resources, the reference signal is transmitted on the D reference signal resources, and D is a positive integer.

In an embodiment, a reference signal is transmitted on D reference signal resources located at different time slots, and D is greater than 1 ;
where the configuration information includes a time offset between a reference signal resource.

In an embodiment, a reference signal is transmitted on D reference signal resources located at different time slots, and D is greater than 1 ;
where a signaling in a DCI format carries a time offset between a reference signal resource.

In an embodiment, a reference signal is transmitted on D reference signal resources located at different time slots, and D is greater than 1 ;
where numbers of ports of at least two reference signal resources are different.

The embodiments of the present disclosure further provide a reference signal transmission apparatus. FIG. 3 is a structural schematic diagram of a reference signal transmission provided by an embodiment. As shown in FIG. 3, the reference signal transmission apparatus includes:
a configuring module 310, configured to configure configuration information of a reference signal resource, where the configuration information includes a time domain symbol and a frequency domain position of a reference signal;
a transmitting module 320, configured to transmit the reference signal on the reference signal resource according to the configuration information.

In the reference signal transmission apparatus of this embodiment, configuration information of a reference signal resource can be flexibly configured by a first communication node. On this basis, transmitting a reference signal on a reference signal resource according to the configuration information can effectively improve the flexibility of a reference signal transmission, thereby facilitating completion of a transmission of a reference signal, reducing the complexity of a system, saving the unnecessary reference signal transmission overhead, and reducing the resource occupancy rate. For example, it can avoid blindly using more wireless resources to transmit the reference signal, avoiding blindly and ineffectively transmitting the reference signal, avoiding blindly detecting the reference signal ineffectively, etc.

In an embodiment, the apparatus further includes:
a triggering module, configured to trigger a transmission of a reference signal through a signaling of a downlink control information DCI format;
where a signaling in a DCI format once triggers a reference signal to be transmitted on a reference signal resource for D times, and D is a positive integer.

In an embodiment, the configuration information includes information of a number of times D of a transmission of the reference signal on the reference signal resource.

In an embodiment, a signaling in a DCI format carries information of a number of times D of a transmission of the reference signal on the reference signal resource.

In an embodiment, a part of information of D carried by a signaling in a DCI format and another part of the information of D included in configuration information jointly indicate a number of times D of a transmission of the reference signal on the reference signal resource.

In an embodiment, the configuration information includes a time offset of two adjacent reference signal transmissions.

In an embodiment, a time offset of two adjacent reference signal transmissions is carried by a signaling in a DCI format.

In an embodiment, a part of information of a time offset of two adjacent reference signal transmissions carried by a signaling in a DCI format and another part of information of a time offset of two adjacent reference signal transmissions included in configuration information jointly indicate a time offset between two adjacent reference signal transmissions.

In an embodiment, a number of times of a transmission of the reference signal on the reference signal resource is determined according to a time offset of two adjacent reference signal transmissions.

In an embodiment, a time offset of two adjacent reference signal transmissions is determined according to a number of times of a transmission of the reference signal on the reference signal resource.

In an embodiment, the configuration information includes K time offsets, where different time offsets correspond to different reference signal transmission rounds, and K is a positive integer.

In an embodiment, the configuration information includes K time offsets, where different time offsets sequentially correspond to different reference signal transmission rounds, and K is a positive integer.

In an embodiment, the configuration information includes: a period of a reference signal resource, and a time slot offset of a reference signal resource, where a first communication node indicates at least one of: a number of times D' of a continuous transmission of a reference signal on a reference signal resource, a number of times N of a continuous stop of a reference signal on a reference signal resource; where D' is a positive integer and N is a non-negative integer.

In an embodiment, at least one of D' and N is indicated through a signaling in a DCI format.

In an embodiment, the configuration information further includes: a number of times D' of a continuous transmission of the reference signal on the reference signal resource, and a number of times N of a continuous stop of the reference signal on the reference signal resource.

In an embodiment, the configuration information further includes: a number of times D' of a continuous transmission of the reference signal on the reference signal resource; and a number of times N of a continuous stop of the reference signal on the reference signal resource carried by a signaling in a DCI format.

In an embodiment, the configuration information further includes: a number of times N of a continuous stop of the reference signal on the reference signal resource; a number of times D' of a continuous transmission of the reference signal on the reference signal resource carried by a signaling in a DCI format.

In an embodiment, a signaling in a DCI format carries: a number of times N of a continuous stop of the reference signal on the reference signal resource, and a number of times D' of a continuous transmission of the reference signal on the reference signal resource.

In an embodiment, a reference signal is transmitted according to following information: a reference value of a number of times D' of a continuous transmission of the reference signal; a number of times N of a continuous stop of the reference signal; an offset value of a number of times D' of a continuous transmission of the reference signal carried by a signaling in a DCI format, where D' is a positive integer and N is a non-negative integer.

In an embodiment, a reference signal is transmitted according to following information: a number of times D' of a continuous transmission of the reference signal; a reference value of a number of times N of a continuous stop of the reference signal; an offset value of a number of a continuous stop of the reference signal carried by a signaling in a DCI format, where D' is a positive integer and N is a non-negative integer.

In an embodiment, a reference signal is transmitted according to following information: a number of times D' of a continuous transmission of the reference signal, and a number of times N of a continuous stop of the reference signal indicated by the number of times of a continuous transmission of the reference signal, where D' is a positive integer, N is a non-negative integer.

In an embodiment, a reference signal is transmitted according to following information: a number of times N of a continuous stop of the reference signal, and a number of times D' of a continuous transmission of the reference signal indicated by the number of times of a continuous stop of the reference signal, where D' is a positive integer and N is a non-negative integer.

In an embodiment, a reference signal resource set is triggered by a signaling in a DCI format, where the reference signal resource set includes D reference signal resources, a reference signal is transmitted on the D reference signal resources, and D is a positive integer.

In an embodiment, a reference signal is transmitted on D reference signal resources located at different time slots, and D is greater than 1; and the configuration information includes a time offset between reference signal resources.

In an embodiment, a reference signal is transmitted on D reference signal resources located at different time slots, and D is greater than 1; and a signaling in a DCI format carries a time offset between reference signal resources.

In an embodiment, a reference signal is transmitted on D reference signal resources located at different time slots, and D is greater than 1, where numbers of ports of at least two reference signal resources are different.

The reference signal transmission apparatus proposed in this embodiment and the reference signal transmission method proposed in the above embodiments belong to the same inventive concept. Technical details that are not described in detail in this embodiment can be referred to any of the above embodiments, and this embodiment has the same beneficial effects as performing the reference signal transmission.

The embodiments of the present disclosure further provide a reference signal receiving apparatus. FIG. 4 is a structural schematic diagram of a reference signal receiving apparatus provided by an embodiment. As shown in FIG. 4, the reference signal receiving apparatus includes:
a configuration information receiving module 410, configured to receive configuration information of a reference signal resource, where the configuration information includes a time domain symbol and a frequency position of a reference signal;
a reference signal receiving module 420, configured to receive the reference signal on the reference signal resource according to the configuration information.

In the reference signal receiving apparatus of this embodiment, a second communication node receives configuration information of a reference signal resource sent by a first communication node, where the configuration information of the reference signal resource is flexibly configured by the first communication node, and the configuration information may include a time domain symbol and a frequency domain position of a reference signal. On this basis, the second communication node may receive the reference signal sent by the first communication node on the reference signal resource according to received configuration information. Through flexible configuration of the configuration information, the flexibility of a reference signal transmission and a reference signal reception can be improved.

In an embodiment, a transmission of a reference signal is triggered by a signaling in a DCI format. A signaling in a DCI format once triggers a reference signal to be transmitted D times on a reference signal resource, and D is a positive integer.

In an embodiment, configuration information includes information of a number of times D of a transmission of a reference signal on a reference signal resource.

In an embodiment, a signaling in a DCI format carries information of a number of times D of a transmission of a reference signal on a reference signal resource.

In an embodiment, a number of times D of a transmission of a reference signal on a reference signal resource is jointly indicated by a part of the information of D carried by a signaling in a DCI format and another part of the information of D included in configuration information.

In an embodiment, configuration information includes a time offset of two adjacent reference signal transmissions.

In an embodiment, a signaling in a DCI format carries a time offset of two adjacent reference signal transmissions.

In an embodiment, a time offset of two adjacent reference signal transmissions is jointly indicated by a part of information of a time offset of two adjacent reference signal transmissions carried by a signaling in a DCI format and another part of information of a time offset of two adjacent reference signal transmissions included in configuration information.

In an embodiment, a number of times of a transmission of a reference signal on a reference signal resource is determined according to a time offset of two adjacent reference signal transmissions.

In an embodiment, a time offset between two adjacent reference signal transmissions is determined according to a number of times of a transmission of a reference signal on a reference signal resource.

In an embodiment, configuration information includes K time offsets, where different time offsets correspond to different reference signal transmission rounds, and K is a positive integer.

In an embodiment, configuration information includes K time offsets, where different time offsets sequentially correspond to different reference signal transmission rounds, and K is a positive integer.

In an embodiment, configuration information includes: a period of a reference signal resource and a time slot offset of a reference signal resource.

A first communication node indicates at least one of: a number of times D' of a continuous transmission of a reference signal on a reference signal resource, and a number of times N of a continuous stop of a reference signal on a reference signal resource; where D' is a positive integer and N is a non-negative integer.

In an embodiment, at least one of D' and N is indicated through a signaling in a DCI format.

In an embodiment, configuration information further includes: a number of times D' of a continuous transmission of a reference signal on a reference signal resource, and a number of times N of a continuous stop of a reference signal on a reference signal resource.

In an embodiment, configuration information further includes: a number of times D' of a continuous transmission of a reference signal on a reference signal resource; and a number of times N of a continuous stop of a reference signal on a reference signal resource carried by a signaling in a DCI format.

In an embodiment, configuration information further includes: a number of times N of a continuous stop of a reference signal on a reference signal resource; and a number of times D' of a continuous transmission of a reference signal on a reference signal resource carried by a signaling in a DCI format.

In an embodiment, a signaling in a DCI format carries: a number of times N of a continuous stop of a reference signal on a reference signal resource, and a number of times D' of a continuous transmission of a reference signal on a reference signal resource.

In an embodiment, a reference signal is transmitted according to following information: a reference value of a number of times D' of a continuous transmission of a reference signal; a number of times N of a continuous stop of a reference signal; an offset value of a number of times D' of a continuous transmission of a reference signal carried by a signaling in a DCI format, where D' is a positive integer and N is a non-negative integer.

In an embodiment, a reference signal is transmitted according to following information: a number of times D' of a continuous transmission of a reference signal; a reference value of a number of times N of a continuous stop of a reference signal; an offset value of a number of times N of a continuous stop of a reference signal carried by a signaling in a DCI format, where D' is a positive integer and N is a non-negative integer.

In an embodiment, a reference signal is transmitted according to following information: a number of times D' of a continuous transmission of a reference signal, and a number of times N of a continuous stop of a reference signal indicated by the number of times of a continuous transmission of a reference signal, where D' is a positive integer and N is not Negative integer.

In an embodiment, a reference signal is transmitted according to following information: a number of times N of a continuous stop of a reference signal, and a number of times D' of a continuous transmission of a reference signal indicated by the number of a continuous stop of the reference signal, where D' is a positive integer and N is a non-negative integer.

In an embodiment, a reference signal resource set can be triggered by a signaling in a DCI format. The reference signal resource set includes D reference signal resources. A reference signal is transmitted on D reference signal resources, and D is a positive integer.

In an embodiment, a reference signal is transmitted on D reference signal resources located at different time slots, and D is greater than 1.

Configuration information includes a time offset between a reference signal resource.

In an embodiment, a reference signal is transmitted on D reference signal resources located at different time slots, and D is greater than 1.

A signaling in a DCI format carries a time offset between a reference signal resource.

In an embodiment, a reference signal is transmitted on D reference signal resources located at different time slots, and D is greater than 1.

The number of a port of at least two reference signal resources is different.

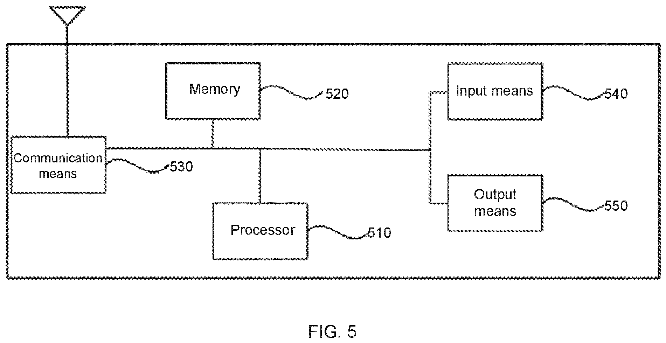

The embodiments of the present disclosure further provide a communication node, which may be a first communication node or a second communication node. FIG. 5 is a schematic diagram of a hardware structure of a communication node provided by an embodiment. As shown in FIG. 5, the communication node provided by the present disclosure includes a memory 520, a processor 510, and a computer program stored in the memory and runnable on the processor. Upon executing the program, the processor 510 implements the above-mentioned reference signal transmission method or the reference signal receiving method.

The communication node may further include a memory 520; the processor 510 of the communication node may be one or more processor 510. One processor 510 is taken as an example in FIG. 5. The memory 520 is used to store one or more programs; and the one or more programs are executed by the one or more processors 510, so that the one or more processors 510 implement the reference signal transmission method or the reference signal receiving method as described in the embodiments of the present disclosure.

The communication node further includes: a communication means 530, an input means 540 and an output means 550.

The processor 510, the memory 520, the input means 540 and the output means 550 of the communication node may be connected via a bus or in other ways, and the connection via a bus is taken as an example in FIG. 5.

The input means 540 may be used to receive an inputted digital or character information and generate a keyboard signal input related to a user setting and a function control of the communication node. The output means 550 may include a display device such as a display screen.

The communication means 530 may include a receiver and a transmitter. The communication apparatus 530 is configured to perform an information transmission and an information reception of a communication according to a control of the processor 510.

As a computer-readable storage medium, the memory 520 may be configured for storing a software program, a computer-executable program, and a module, such as a program instruction/ program module corresponding to the reference signal transmission method provided in the embodiments of the present disclosure (for example, the configuring module 310 and the transmitting module 320 in the reference signal transmission apparatus), or a program instruction/ program module corresponding to the reference signal receiving method provided in the embodiments of the present disclosure (for example, the configuration information receiving module 410 and the reference signal receiving module 420 in the reference signal receiving apparatus). The memory 520 may include an area for storing a program and an area for storing data, where the area for storing a program may store an operating system, an application program required by at least one function, the area for storing data can store data created according to the communication node and the like. In addition, the memory 520 may include a high-speed random access memory, and may also include a non-volatile memory, such as at least one magnetic disk storage device, a flash memory device, or other non-volatile solid state storage devices. In some examples, the memory 520 may further include memories located remotely with respect to the processor 510, and these remote memories may be connected to the communication node via a network. Instances of the network include, but are not limited to, the Internet, an intranet, a local area network, a mobile communication network, and combinations thereof.

The embodiments of the present disclosure further provide a storage medium. The storage medium has stored thereon a computer program, and the computer program, upon being executed by a processor, implements the reference signal transmission method or the reference signal receiving method as described in any of the embodiments of the present disclosure. The reference signal transmission method includes: configuring configuration information of a reference signal resource, where the configuration information includes a time domain symbol and a frequency domain position of a reference signal; and transmitting the reference signal on the reference signal resource according to the configuration information. The reference signal receiving method includes: receiving configuration information of a reference signal resource, where the configuration information includes a time domain symbol and a frequency domain position of a reference signal; and receiving the reference signal on the reference signal resource according to the configuration information.

The computer storage medium in the embodiment of the present disclosure may be any combination of one or more computer-readable media. The computer-readable medium may be a computer-readable signal medium or a computer-readable storage medium. The computer-readable storage medium may be, for example, but is not limited to: an electronic, magnetic, optical, electromagnetic, infrared, or semiconductor system, apparatus or device, or any combination thereof. More specific examples (non-exhaustive list) of computer-readable storage medium include: electrical connections having one or more wires, portable computer disks, hard drives, random access memory (RAM), read-only memory (ROM), erasable programmable read-only memories (EPROM), flash memories, optical fibers, portable CD-ROM, optical storage devices, magnetic storage devices, or any suitable combination of the above. A computer-readable storage medium may be any tangible medium that contains or stores a program for use by or in connection with an instruction execution system, apparatus, or device.

A computer-readable signal medium may include a data signal propagated in baseband or as part of a carrier wave carrying computer-readable program code therein. Such propagated data signals may take many forms, including but not limited to: electromagnetic signals, optical signals, or any suitable combination of the above. A computer-readable signal medium may also be any computer-readable medium other than a computer-readable storage medium that can send, propagate, or transmit a program for use by or in connection with an instruction execution system, apparatus, or device.

The program code contained on a computer-readable medium can be transmitted using any suitable medium, including but not limited to: wireless, wire, fiber optical cable, radio frequency (RF), etc., or any suitable combination of the above.

Computer program code for performing operations of the present disclosure may be written in one or more programming languages, including object-oriented programming languages such as Java, Smalltalk, C++, and conventional procedural programming language, such as the "C" language or similar programming language. The program code may execute entirely on the user's computer, partly on the user's computer, as a separate software package, partly on the user's computer and partly on a remote computer or entirely on the remote computer or server. In situations involving remote computers, the remote computer can be connected to the user's computer through any kind of networks, including a local area network (LAN) or a wide area network (WAN), or it can be connected to an external computer (such as an Internet service provider through the Internet).

The foregoing is merely exemplary embodiments of the present disclosure, and is not intended to limit the scope of protection of the present disclosure.

Those skilled in the art will understand that the term "user terminal" covers any suitable type of wireless user equipment, such as a mobile phone, a portable data processing apparatus, a portable web browser, or a vehicle-mounted mobile station.

In general, various embodiments of the present disclosure may be implemented in hardware or special-purpose circuits, software, logic, or any combination thereof. For example, in some aspects, the embodiments may be implemented in hardware, while in other aspects, the embodiments may be implemented in hardware or software which may be executed by a controller, a microprocessor or other computing device, although the present disclosure is not limited thereto.

The embodiments of the present disclosure may be implemented by a data processor of a mobile apparatus executing computer program instructions, for example, in a processor entity, or by hardware, or by a combination of software and hardware. Computer program instructions may be assembly instructions, instruction set architecture (ISA) instructions, machine instructions, machine-related instructions, microcode, firmware instructions, state setting data, or source code or object code written in any combination of one or more programming languages.

The block diagram of any logic process in the drawings of the present disclosure may represent program steps, or may represent interconnected logic circuits, modules, and functions, or may represent a combination of program steps, logic circuits, modules, and functions. Computer programs may be stored on the memory. The memory may be of any type suitable for the local technical environment and may be implemented by using any suitable data storage technology, which, for example, includes but is not limited to ROM, RAM, or optical memory device and system (digital video disc (DVD) or compact disk (CD)). The computer-readable medium may include a non-transitory storage medium. The data processor may be of any type suitable to the local technical environment, such as, but not limited to, a general purpose computer, a special-purpose computer, a microprocessor, a digital signal processing (DSP), an application-specific integrated circuit (ASIC), a field-programmable gate array (FPGA), and a processor based on a multi-core processor architecture.

## Claims

1. A reference signal transmission method, applied to a first communication node, where the method comprises:
configuring configuration information of a reference signal resource, wherein the configuration information comprises a time domain symbol and a frequency domain position of a reference signal;
transmitting the reference signal on the reference signal resource according to the configuration information.

2. The method according to claim 1, further comprising:
triggering a transmission of the reference signal through a signaling of a downlink control information (DCI) format;
wherein a signaling in a DCI format once triggers the reference signal to be transmitted on the reference signal resource for D times, and D is a positive integer.

3. The method according to claim 2, wherein the configuration information comprises information of a number D of a transmission of the reference signal on the reference signal resource.

4. The method according to claim 2, wherein the signaling in the DCI format carries information of a number of times D of a transmission of the reference signal on the reference signal resource.

5. The method according to claim 2, further comprising:
jointly indicating a number of times D of a transmission of the reference signal on the reference signal through first information of D carried by the signaling in the DCI format and second information of D included in the configuration information.

6. The method according to claim 2, wherein the configuration information comprises a time offset of two adjacent reference signal transmissions.

7. The method according to claim 2, wherein the signaling in the DCI format carries a time offset of two adjacent reference signal transmissions.

8. The method according to claim 2, further comprising:
jointly indicating a time offset of two adjacent reference signal transmissions through third information of the time offset of the two adjacent reference signal transmissions carried by the signaling in the DCI format and fourth information of the time offset of the two adjacent reference signal transmissions included in the configuration information.

9. The method according to claim 6, 7, or 8, further comprising:
determining a number of times of a transmission of the reference signal on the reference signal resource according to the time offset of the two adjacent reference signal transmissions.

10. The method according to any one of claims 2 to 5, further comprising:
determining a time offset of two adjacent reference signal transmissions according to a number of times of a transmission of the reference signal on the reference signal resource.

11. The method according to claim 1, wherein the configuration information comprises K time offsets, wherein different time offsets correspond to different reference signal transmission rounds, and K is a positive integer.

12. The method according to claim 1, wherein the configuration information comprises K time offsets, wherein different time offsets sequentially correspond to different reference signal transmission rounds, and K is a positive integer.

13. The method according to claim 1, wherein the configuration information comprises: a period of the reference signal resource and a time slot of the reference resource;
wherein the first communication node indicates at least one of: a number of times D' of a continuous transmission of the reference signal on the reference signal resource, and a number of times N of a continuous stop of the reference signal on the reference signal resource; wherein D' is a positive integer and N is a non-negative integer.

14. The method according to claim 13, further comprising:
indicating at least one of D' and N through a signaling in a DCI format.

15. The method according to claim 13, wherein the configuration information further comprises: a number of times D' of the continuous transmission of the reference signal on the reference signal resource, and a number of times N of the continuous stop of the reference signal on the reference signal resource.

16. The method according to claim 13, wherein the configuration information further comprises: a number of times D' of the continuous transmission of the reference signal on the reference signal resource;
a signaling in a DCI format carries a number of times N of the continuous stop of the reference signal on the reference signal resource.

17. The method according to claim 13, wherein the configuration information further comprises: a number of times N of the continuous stop of the reference signal on the reference signal resource;
a signaling in a DCI format carries a number of times D' of the continuous transmission of the reference signal on the reference signal resource.

18. The method according to claim 13, wherein a signaling in a DCI format carries: a number of times N of the continuous stop of the reference signal on the reference signal resource, and a number of times D' of the continuous transmission of the reference signal on the reference signal resource.

19. The method according to claim 1, wherein the reference signal is transmitted according to following information:
a reference value of a number of times D' of a continuous transmission of a reference signal; a number of times N of a continuous stop of a reference signal; and an offset value of a number of times D' of a continuous transmission of a reference signal carried by a signaling in a DCI format, wherein D' is a positive integer and N is a non-negative integer.

20. The method according to claim 1, wherein the reference signal is transmitted according to following information:
a number of times D' of a continuous transmission of a reference signal; a reference value of a number of times N of a continuous stop of a reference signal; and an offset value of a number of times N of a continuous stop of a reference signal carried by a signaling in a DCI format, wherein D' is a positive integer and N is a non-negative integer.

21. The method according to claim 1, wherein the reference signal is transmitted according to following information:
a number of times D' of a continuous transmission of a reference signal, and a number of times N of a continuous stop of a reference signal indicated by the number of times of the continuous transmission of the reference signal, wherein D' is a positive integer and N is a non-negative integer.

22. The method according to claim 1, wherein the reference signal is transmitted according to following information:
a number of times N of a continuous stop of a reference signal, and a number of times D' of a continuous transmission of a reference signal indicated by the number of times of the continuous stop of the reference signal, wherein D' is a positive integer and N is a non-negative integer.

23. The method according to claim 1, further comprising:
triggering a reference signal resource set through a signaling in a DCI format, wherein the reference signal resource set comprises X reference signal resources, the reference signal is transmitted on the X reference signal resources, and X is a positive integer.

24. The method according to claim 23, wherein the reference signal is transmitted on the X reference signal resources located at different time slots, and X is greater than 1;
the configuration information comprises a time offset between reference signal resources.

25. The method according to claim 23, wherein the reference signal is transmitted on the X reference signal resources located at different time slots, and X is greater than 1;
wherein the signaling in the DCI format carries a time offset between reference signal resources.

26. The method according to claim 23, wherein the reference signal is transmitted on the X reference signal resources located at different time slots, and X is greater than 1;
wherein numbers of ports of at least two reference signal resources are different.

27. A reference signal receiving method, applied to a second communication node, wherein the method comprises:
receiving configuration information of a reference signal resource, wherein the configuration information comprises a time domain symbol and a frequency domain position of a reference signal;
receiving the reference signal on the reference signal resource according to the configuration information.

28. A communication node, comprising a memory, a processor, and a computer program stored on the memory and runnable on the processor, the program, upon being executed by a processor, implements the reference signal transmission method according to any one of claims 1 to 26 or the reference signal receiving method according to claim 27.

29. A computer-readable storage medium storing a computer program, wherein the computer program, upon being executed by a processor, implements the reference signal transmission method according to any one of claims 1 to 26 or the reference signal receiving method according to claim 27.
